# EUROPÄISCHE PATENTSCHRIFT

(11) **EP 0 732 458 B1**
(45) Veröffentlichungstag und Bekanntmachung des Hinweises auf die Patenterteilung: **11.11.1998**
(21) Anmeldenummer: 96103641.5
(22) Anmeldetag: 08.03.1996
(51) Int. Cl.: E03F 5/14, E02B 5/08

(54) **Vorrichtung zur Entnahme von Feststoffen aus einer Flüssigkeit-Feststoffmasse**
Device for removing solids from a fluid/solid mass
Dispositif pour l'élimination des particules solides d'une masse solide/liquide

(30) Priorität: 11.03.1995 DE 19508894; 11.03.1995 DE 29504257 U
(43) Veröffentlichungstag der Anmeldung: 18.09.1996
(73) Patentinhaber: Egner, Andrea, 74740 Adelsheim (DE)
(72) Erfinder: Egner, Siegfried, 74740 Adelsheim (DE)
(74) Vertreter: Clemens, Gerhard, Dr.-Ing.

(56) Entgegenhaltungen:
- DE-U- 9 109 180
- DE-U- 9 205 674
- DE-U- 9 209 026
- DE-U- 9 305 023
- DE-U- 9 318 411

## Beschreibung

### TECHNISCHES GEBIET

Die vorliegende Erfindung betrifft eine Vorrichtung zur Entnahme von Feststoffen aus einer Flüssigkeit-Feststoffmasse, insbesondere Rechengut einer Kläranlage, mit einem Behältnis mit Bodenwandung, wobei das Behältnis einen Einwurfbereich aufweist, in den die Flüssigkeit-Feststoffmasse eingebracht wird und der nach oben offen ausgebildet ist, einer bereichsweise in die Flüssigkeit-Feststoffmasse eintauchende geneigte Förderschnecke mit geradlinigem Verlauf, einer die Förderschnecke umgebende Siebeinheit und einer Antriebseinrichtung für die Förderschnecke.

Im Rahmen einer mechanischen Reinigung beim Klärprozeß von Abwasser in Kläranlagen müssen die im Klärwasser enthaltenen Feststoffe entfernt werden, bevor das Klärwasser einer anschließenden biologischen Reinigungsstufe zugeführt wird. So werden derartige Vorrichtungen häufig im Bereich von Kläranlagen eingesetzt, zur Auswaschung von Fäkalien aus Rechengut, wobei das Rechengut nicht zerkleinert werden soll. Im ungereinigten Klärwasser befindet sich eine Vielzahl von Faserstoffen, Plastikformteilen, Textilien usw. Diese Stoffe müssen entfernt werden. Vor dem Entfernen dieser Stoffe müssen diese jedoch gewaschen werden, damit die organischen Bestandteile im Klärwasser verbleiben und die anschließende biologische Reinigungsstufe des Klärwassers durchlaufen werden kann.

### STAND DER TECHNIK

Bei den eingangs genannten Vorrichtungen zur Entnahme von Feststoffen wird eine Förderschnecke eingesetzt, die schräg ansteigend nach außen aus dem Behältnis ragt. Eine derartige Vorrichtung ist aus der DE-U-92 09 026 bekannt. Am oberen freien Ende ist die Antriebseinrichtung vorhanden, die die Spirale antreibt. Die bekannten Vorrichtungen arbeiten im ziehenden Betrieb, d. h. die auszutragenden Feststoffe werden auf die Antriebseinrichtung zubewegt. Gleichzeitig ist innerhalb des Behältnis noch ein Verwirbelungsgerät vorhanden. Im Bereich kurz vor der Antriebseinheit ist eine Auswurföffnung vorgesehen, durch die hindurch die geförderten Feststoffe in einen Sammelbehälter gelangen. Beim Betrieb derartiger Vorrichtungen kann es vorkommen, daß Feststoffe an der Spirale selbst kleben bleiben. Dies vor allem dann, wenn wenig Schmierstoffe vorhanden sind, was insbesondere bei Rechengutwaschanlagen der Fall ist, da der Feststoff ja gewaschen gefördert wird. Auch ein Hängenbleiben von Feststoffen an der Flanschwandung für die Antriebsvorrichtung in der Innenwandung des Kanals für die Spirale kommt vor. Dadurch setzt sich im Laufe der Zeit die Auswurföffnung zu oder es bildet sich eine um die Spirale herumgewickelte verdichtete "Feststoffschlange", so daß es zu Funktionsstörungen kommt. Derartige Störungen werden als besonders negativ empfunden, da sie den Gesamtklärprozeß infolge Stillstands der Vorrichtung empfindlich stören.

Das Dokument DE-U-91 09 180 zeigt eine Rechengutpresse zum Verdichten des in Kläranlagen anfallenden Rechengutes mit einer in einem durchbrochenen Siebgehäuse und einem Einwurftrichter angeordneten, eine horizontale Schneckenwelle aufweisenden Förder- und Entwässerungsschnecke mit einem nachgeordneten Austragrohr. Dabei ragt die horizontale Schneckenwelle durch einen eine Misch- und Waschzone bildenden durchbrochenen Rohrabschnitt, wobei mehrere axial und in Umfangsrichtung verteilt auf der Schneckenwelle angeordnete Mischflügel in der Misch- und Waschzone angenähert den gesamten Rohrquerschnitt bestreichen. Bei dieser Rechengutpresse arbeitet die Förderschnecke in schiebendem Betrieb.

In dem deutschen Gebrauchsmuster DE-U-92 05 674 ist ein Gerät für die mechanische Reinigung von Flüssigkeiten in Gerinnen oder Behältern angegeben, bei der die Förderschnecke von der dem Förderkanal abgewandten Seite des Behältnisses aus angetrieben wird und sich nur über den Anfangsbereich des Förderkanals erstreckt. Das Behältnis selbst wird entweder in das Gerinne geneigt eingelegt oder ist innerhalb eines weiteren Behältnis vorhanden, dem über ein Behältereinlauf ein Flüssigkeit-Feststoffgemisch zugeführt wird. Insbesondere beim Eintauchen in das Gerinne sind erhöhte Dichtungsmaßnahmen erforderlich, da die Antriebseinheit bereichsweise unterhalb des Wasserspiegels des Gerinnes vorhanden ist.

In dem deutschen Gebrauchsmuster DE-U-93 05 023 ist eine Stempel- oder Schneckenpresse zur Entwässerung von Rechengut oder dgl. beschrieben, mit einem rohr- oder trogförmigen Ausschubkanal, wobei der Ausschubkanal an der Unterseite einen Siebboden mit darunterliegendem Auffangblech aufweist.

Das deutsche Gebrauchsmuster DE-U-93 18 411 offenbart eine Siebanlage zur Abwasserbehandlung mit einem im wesentlichen quer zur Flußrichtung des Abwasser angeordneten Sieb. Das Sieb kann hierbei durch eine rotationsfähig angeordnete Reinigungswendel gereinigt werden, wobei eine Bürste eingesetzt wird, deren Borsten an der Innenseite des Siebs entlangstreifen und ggf. in die Ausnehmung hineingreifen.

### DARSTELLUNG DER ERFINDUNG

Der vorliegenden Erfindung liegt ausgehend von dem genannten Stand der Technik das technische Problem bzw. die Aufgabe zugrunde, eine Vorrichtung der eingangs genannten Art so zu verbessern, daß die im Stand der Technik genannten Nachteile nicht mehr auftreten. Insbesondere sollen neben einem einfachen und robusten Aufbau eine dauerhaft zuverlässige Funktion mit geringster Störanfälligkeit gewährleistet werden.

Die erfindungsgemäße Vorrichtung zur Entnahme von Feststoffen aus einer Flüssigkeit-Feststoffmasse ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Vorrichtung zeichnet sich demgemäß dadurch aus, daß die Antriebseinrichtung unter der Bodenwandung des Behälters angeordnet ist und diese durchstößt, so daß die Förderschnecke im schiebenden Betrieb arbeitet, d. h. die Feststoffe von der Antriebseinrichtung weg aus dem Behältnis herausgefördert werden, die Förderschnecke als seelenlose Spirale ausgebildet ist und die Siebeinheit zumindest im Eintauchbereich bereichsweise als nach oben offen, insbesondere als U-Profil-Trog mit Lochblechquerschnitt ausgebildet ist. Die erfindungsgemäße Vorrichtung wird bevorzugt zur Auswaschung von Fäkalien aus Rechengut eingesetzt. Das Rechengut selbst wird hierbei nicht zerkleinert. Dadurch, daß die Förderschnecke im schiebenden Betrieb arbeitet, tritt das im Stand der Technik bekannte Problem nicht mehr auf. Die Spirale arbeitet beispielsweise gegen ein freies Ende oder in eine Preßzone, Schredderzone oder Hygienisierzone oder dergleichen und ein Zusetzen der Auswurföffnung ist praktisch nicht mehr möglich.

Zu besonders guten Waschergebnissen gelangt man, wenn erfindungsgemäß eine Wasserzuführungseinrichtung mit Spüldüsen vorhanden ist, wobei Spüldüsen in Längsrichtung versetzt an den Seitenwänden im unteren Bereich nach innen gerichtet und insbesondere im Bodenbereich nach oben gerichtet und gegenüberliegend im oberen Bereich nach unten gerichtet angeordnet sind, die eine Verwirbelung des Wassers herbeiführen. Beim Einsatz der erfindungsgemäßen Vorrichtung als Rechengutwaschanlage ist die Vorrichtung in der Lage das ankommende Siebgut so auszuwaschen, daß möglichst viele organische Stoffe vom Restmaterial getrennt werden. Darüber hinaus ist eine schonende Siebgutbehandlung möglich, d. h. leicht lösbare organische Stoffe können dem Kläranlagenzulauf wieder zugeführt werden. Die Feststoffe, d. h. das Restmaterial, werden nach dem Waschvorgang durch die Förderschnecke ausgetragen, ohne daß Verstopfungen oder sonstige Transportstörungen auftreten. Anschließend wird entwässert.

Bevorzugt arbeitet die Anlage als vollautomatische Waschanlage mit konstantem Betriebswasserspiegel, wobei hierzu zu Überwachungszwecken bevorzugt Mittel zum Überwachen des Betriebswasserspiegels vorhanden sind, die entsprechende Ventile einer Wasserzuführeinrichtung ansteuern, sobald eine Veränderung im Wasserspiegel eintritt. In frei wählbaren Intervallen wird die Anlage automatisch entleert und gereinigt.

Gemäß einer bevorzugten Ausgestaltung sind im Überwasserbereich, d. h. in dem Bereich, in den die Förderschnecke nicht in das Flüssigkeit-Feststoffgemisch eintaucht, Sprühdüsen vorhanden, die die herausgeförderten Feststoffe besprühen, wodurch ein weiterer Reinigungsvorgang erreicht wird (Feinreinigung).

Um die herausgeförderten Feststoffe platzsparend transportieren zu können, ist es günstig, der Förderschnecke eine Verdichtungseinheit nachzuschalten, die die geförderten Feststoffe verdichtet.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht einer als Rechengutwaschanlage ausgebildeten Vorrichtung mit einer Förderschnecke im schiebenden Betrieb,
- Fig. 2: schematische Draufsicht auf die Vorrichtung gemäß Fig. 1 und
- Fig. 3: schematische Stirnansicht der Vorrichtung gemäß Fig. 1.

### WEGE ZUM AUSFÜHREN DER ERFINDUNG

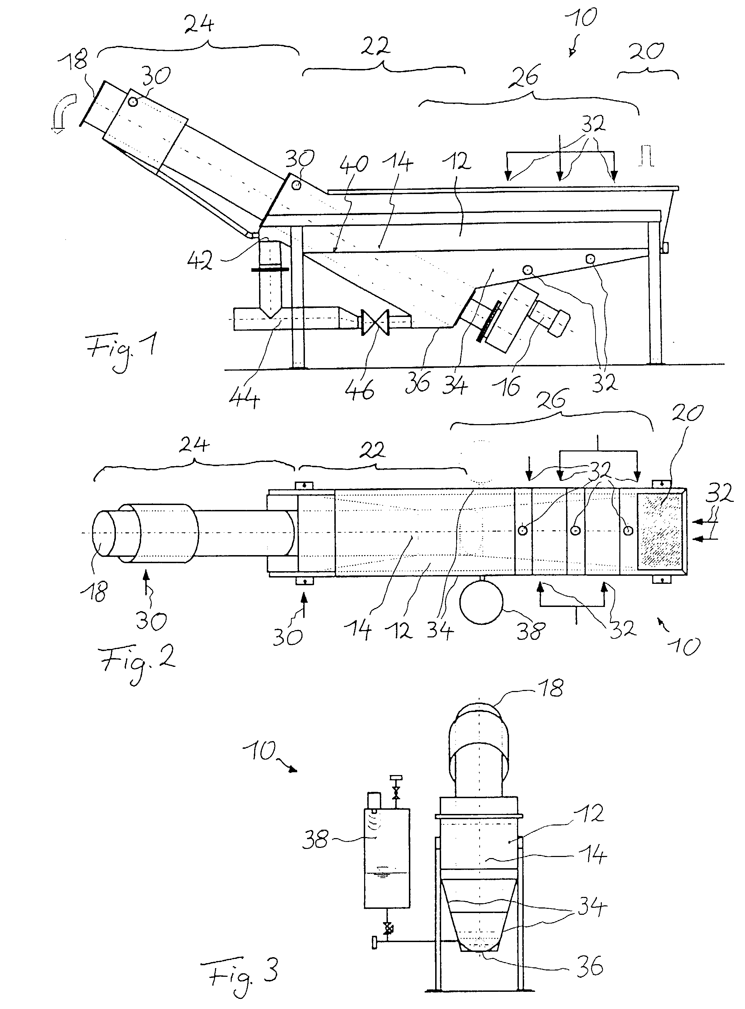

Eine Ausführungsform einer Vorrichtung 10 zur Entnahme von Feststoffen aus einer Flüssigkeit-Feststoffmasse ist in den Figuren als Rechengutwaschanlage 10 dargestellt. Die Vorrichtung 10 weist ein Behältnis 12 auf, in das Rechengut in einem Einwurfbereich 20 eingebracht werden kann. Der Einwurfbereich 20 ist in Fig. 1 im rechten Bereich dargestellt. Mit dem Einwurfbereich 20 überlappt ein anschließender sogenannter Waschbereich 26. Im Waschbereich 26 wird das Rechengut gewaschen. Hierzu ist eine in den Figuren nicht dargestellte Wasserzuführeinrichtung vorhanden, die über Spüldüsen 32 Wasser in den Waschbereich 26 einbringt, so daß eine intensive Verwirbelung stattfindet. Die Spüldüsen 32 sind in den Figuren teilweise als schwarze Pfeile dargestellt.

Im Einwurfbereich 20 und im Waschbereich 26 ist der Boden des Behältnisses geneigt mit zunehmender Tiefe vorhanden, so daß das eingefüllte Rechengut in Verbindung mit dem eingebrachten Spülwasser weiter ins Innere des Behältnisses 12 verbracht wird. An den Waschbereich 26 schließt überlappend ein sogenannter Eintauchbereich 22 an, an den wiederum ein Austragbereich 24 anschließt. In den beiden letztgenannten Bereichen 22, 24 ist eine schräg nach außen verlaufende Förderschnecke 14 vorhanden, der das gewaschene Rechengut zugeführt wird. Angetrieben wird die Förderschnecke 14 durch eine aufgesetzte Antriebseinrichtung 16, die unterhalb der Bodenwandung 36 des Behältnisses 12 angeordnet ist. Durch diese Anordnung arbeitet die Förderschnecke 14, die als seelenlose Spirale ausgebildet ist, im schiebenden Betrieb, d. h. das Fördergut wird von der Antriebseinrichtung weg hin zum offenen Ende 18 der Förderschnecke 14 befördert und dort ausgeworfen.

Im Eintauchbereich 22 ist die Förderschnecke 14 von einem U-Profil-Trog aus Lochblech umgeben, der in den Figuren nicht dargestellt ist. Am Anfangs- und Endbereich des Austragbereiches 24 sind Sprühdüsen 30 angeordnet, die das von der Förderschnecke 14 geförderte Fördergut mit Spülwasser besprühen, um eine erhöhte Reinigung bzw. Feinreinigung des Rechengutes zu erzielen. Im Waschbereich 26 sind u. a. an den Seitenwandungen Spüldüsen 32 vorhanden, die in Längsrichtung, d. h. in Förderrichtung des Förderguts gesehen, versetzt gegeneinander vorhanden sind, wodurch eine gute Verwirbelung des eingebrachten Spülwassers gewährleistet werden kann.

Darüber hinaus ist seitlich neben der Vorrichtung eine Niveau-Meßeinrichtung 38 vorhanden, die gewährleistet, daß sich innerhalb des Behältnisses 12 ein konstanter Betriebswasserspiegel 40 einstellt. Diese Niveau-Meßeinrichtung 38 steuert die Wasserzuführungsvorrichtung an, was in den Figuren nicht dargestellt ist. Im linken Endbereich des Behältnis 12 ist ein Überlauf 42 vorhanden, der in eine Leitung 44 mündet, die über einen Grundabflußschieber 46 mit dem tiefsten Punkt des Behältnis 12 leitungsmäßig verbunden ist.

Im vorliegenden Fall wird das Rechengut von oben im Einwurfbereich 20 in die Waschanlage 10 abgeworfen. Es ist jedoch auch ein Einwurf von der Seite bzw. von hinten möglich. Die Anlage arbeitet vollautomatisch. Bei jedem Einwurf in die Anlage startet ein Eintragsprogramm, bei welchem das Rechengut vorgewaschen wird. Über einen frei einstellbaren Parameter kann die Anzahl der Eintragszyklen eingestellt werden. Ist der vorgegebene Wert erreicht, startet der Waschzyklus, bei welchem das Rechengut aus der Anlage ausgetragen und in eine nicht dargestellte Rechengutpresse abgeworfen wird.

Durch die dargestellte Anlage wird das ankommende Rechengut so ausgewaschen, daß möglichst viele organischen Stoffe vom Restmaterial getrennt werden. Das Rechengut wird schonend behandelt und die leicht lösbaren organischen Stoffe können problemlos dem Kläranlagenzulauf wieder zugeführt werden. Darüber hinaus ist es möglich, in frei wählbaren Intervallen die Anlage so zu schalten, daß sie sich automatisch entleert und Reinigungswasser zugeführt wird.

Die dargestellte Rechengutwaschanlage stellt nur ein Ausführungsbeispiel der erfindungsgemäßen Vorrichtung dar. Erfindungsgemäß ist erkannt worden, daß eine im schiebenden Betrieb arbeitende Förderschnecke nicht die Probleme hinsichtlich Störanfälligkeit infolge Verstopfung durch Fördergut mit sich bringt, wie die bekannten Vorrichtungen. Darüber hinaus kann ein hoher Reinigungsgrad erzielt werden. Die Anlage ist konstruktiv kompakt und einfach auszubilden, wodurch vielfältige Einsatzmöglichkeiten und große Wartungsintervalle hinsichtlich der einzelnen Bauteilkomponenten erzielt werden können.

## Patentansprüche

1. Vorrichtung (10) zur Entnahme von Feststoffen aus einer Flüssigkeit-Feststoffmasse, insbesondere Rechengut einer Kläranlage, mit
- einem Behältnis (12) mit Bodenwandung (36), wobei das Behältnis (12) einen Einwurfbereich (20) aufweist, in den die Flüssigkeit-Feststoffmasse eingebracht wird und der nach oben offen ausgebildet ist,
- einer bereichsweise in die Flüssigkeit-Feststoffmasse eintauchende geneigte Förderschnecke (14) mit geradlinigem Verlauf,
- einer die Förderschnecke (14) umgebende Siebeinheit und
- einer Antriebseinrichtung (16) für die Förderschnecke (14),
**dadurch gekennzeichnet,** daß
- die Antriebseinrichtung (16) unter der Bodenwandung (36) des Behälters (12) angeordnet ist und diese durchstößt, so daß die Förderschnecke (14) im schiebenden Betrieb arbeitet, d. h. die Feststoffe von der Antriebseinrichtung (16) weg aus dem Behältnis (12) herausgefördert werden,
- die Förderschnecke (14) als seelenlose Spirale (14) ausgebildet ist und
- die Siebeinheit zumindest im Eintauchbereich (22) bereichsweise als nach oben offen ausgebildet ist.

2. Vorrichtung nach Anspruch 1,
**dadurch gekennzeichnet,** daß
die Siebeinheit als U-Profil-Trog mit Lochblechquerschnitt ausgebildet ist.

3. Vorrichtung nach Anspruch 1,
**dadurch gekennzeichnet,** daß
außerhalb des Eintauchbereichs (22), d. h. im Austragbereich (24) der Förderschnecke (14) Sprühdüsen (30) angeordnet sind, die die herausgeförderten Feststoffe nochwährend des Fördervorgangs besprühen.

4. Vorrichtung nach einem oder mehreren der vorstehenden Ansprüche,
**dadurch gekennzeichnet,** daß
eine Wasserzuführungseinrichtung mit Spüldüsen (32) zum Zuführen von Spülwasser vorhanden ist, wobei gegenüberliegende Spüldüsen (32) in Längsrichtung versetzt an den Seitenwänden (34) des Behältnis (12) im unteren Bereich nach innen gerichtet und insbesondere im Bodenbereich nach oben und gegenüberliegend im oberen Bereich nach unten gerichtet angeordnet sind, die eine Verwirbelung des Wassers herbeiführen.

5. Vorrichtung nach einem oder mehreren der vorstehenden Ansprüche,
**gekennzeichnet durch**
Mittel (38) zum Überwachen des Betriebswasserspiegels (40).

6. Vorrichtung nach einem oder mehreren der vorstehenden Ansprüche,
**dadurch gekennzeichnet,** daß
im Anschluß an die Förderschnecke eine Verdichtereinrichtung zum Verdichten der geförderten Feststoffe vorhanden ist.

7. Vorrichtung nach Anspruch 1,
**dadurch gekennzeichnet,** daß
die Spirale an ihrem freien Rand nach außen weisende Bürsten im Bereich der Siebeinheit aufweist.

8. Vorrichtung nach einem oder mehreren der vorstehenden Ansprüche,
**dadurch gekennzeichnet,** daß
die Vorrichtung innerhalb vorgebbarer Eintragzyklen mit der Flüssigkeit-Feststoffmasse beschickt wird.

## Claims

1. Apparatus (10) for removing solids from a liquid/solid mass, in particular screenings of a sewage-treatment plant, having
- a container (12) with base wall (36), the container (12) having a charging region (20) into which the liquid/solid mass is fed and which is designed to be open at the top,
- an inclined screw conveyor (14) plunging zonally into the liquid/solid mass and having a rectilinear run,
- a sieve unit surrounding the screw conveyor (14), and
- a drive device (16) for the screw conveyor (14),
characterized in that
- the drive device (16) is arranged under the base wall (36) of the container (12) and passes through said base wall (36), so that the screw conveyor (14) works in a pushing operating state, i.e. the solids are conveyed away from the drive device (16) out of the container (12),
- the screw conveyor (14) is designed as a coreless helix (14), and
- the sieve unit, at least in the immersion region (22), is designed to be open zonally at the top.

2. Apparatus according to Claim 1, characterized in that the sieve unit is designed as a U-section trough having a perforated-plate cross-section.

3. Apparatus according to Claim 1, characterized in that spray nozzles (30) are arranged outside the immersion region (22), i.e. in the discharge region (24), which spray nozzles (30) still spray the extracted solids during the conveying operation.

4. Apparatus according to one or more of the preceding claims, characterized in that there is a water-feed device having rinsing nozzles (32) for feeding rinsing water, opposite rinsing nozzles (32) being staggered in longitudinal direction on the side walls (34) of the container (12) in such a way as to be directed inwards in the lower region and upwards in particular in the base region and, opposite the latter, downwards in the upper region, which rinsing nozzles (32) cause the water to swirl.

5. Apparatus according to one or more of the preceding claims, characterized by means (38) for monitoring the operating water level (40).

6. Apparatus according to one or more of the preceding claims, characterized in that, following the screw conveyor, there is a compaction device for compacting the conveyed solids.

7. Apparatus according to Claim 1, characterized in that the helix, at its free margin, has brushes, which point outwards, in the region of the sieve unit.

8. Apparatus according to one or more of the preceding claims, characterized in that the apparatus is fed with the liquid/solid mass within predeterminable input cycles.

## Revendications

1. Dispositif (10) pour l'élimination des particules solides d'une masse solide-liquide, en particulier des matières retenues par la grille d'une station d'épuration, comportant
- un récipient (12) avec une paroi de fond (36), dans lequel le récipient (12) présente une zone d'introduction (20) dans laquelle est amenée la masse solide-liquide et qui est conçue avec une ouverture vers le haut,
- une transporteuse à vis sans fin inclinée (14) qui, en partie, plonge dans la masse solide-liquide, avec une allure rectiligne,
- une unité de tamisage qui entoure la transporteuse à vis sans fin (14) et
- un dispositif d'entraînement (16) pour la transporteuse à vis sans fin (14),
caractérisé en ce que
- le dispositif d'entraînement (16) est installé sous la paroi de fond (36) du récipient (12) et traverse celui-ci, de telle sorte que la transporteuse à vis sans fin (14) travaille en mouvement pousseur, c.-à-d. que les particules solides sont entraînées par le dispositif d'entraînement (16) hors du récipient (12),
- la transporteuse à vis sans fin (14) est conçue sous forme d'une spirale sans âme (14) et
- l'unité de tamisage est conçue en étant ouverte en partie vers le haut au moins dans la zone d'immersion (22).

2. Dispositif selon la revendication 1, caractérisé en ce que l'unité de tamisage est conçue sous forme d'un bac profilé en U avec une section transversale de tôle perforée.

3. Dispositif selon la revendication 1, caractérisé en ce que des buses de vaporisation (30) sont disposées à l'extérieur de la zone d'immersion (22), c.-à-d. dans la zone de déversement(24) de la transporteuse à vis sans fin (14), qui aspergent encore les matières solides transportées vers l'extérieur au cours du processus de transport.

4. Dispositif selon l'une ou plusieurs des revendications précédentes, caractérisé en ce qu'il est prévu un dispositif d'alimentation en eau avec des buses d'arrosage (32) destinées à amener l'eau de rinçage, des buses d'arrosage (32) opposées étant disposées de façon décalée dans la direction longitudinale sur les parois latérales (34) du récipient (12), orientées vers l'intérieur dans la zone inférieure et, en particulier, vers le haut dans la zone du fond, et en opposition vers le bas dans la zone supérieure, lesquelles réalisent un mouvement tourbillonnant de l'eau.

5. Dispositif selon l'une ou plusieurs des revendications précédentes, caractérisé par des moyens (38) de surveillance du niveau de l'eau de service (40).

6. Dispositif selon l'une ou plusieurs des revendications précédentes, caractérisé en ce qu'il est prévu, raccordé à la transporteuse à vis sans fin, un dispositif compacteur destiné à compacter les particules solides transportées.

7. Dispositif selon la revendication 1, caractérisé en ce que la spirale présente en son bord libre des brosses orientées vers l'extérieur dans la zone de l'unité de tamisage.

8. Dispositif selon l'une ou plusieurs des revendications précédentes, caractérisé en ce que le dispositif est chargé en masse solide-liquide dans des délais de cycles de chargement pouvant être donnés à l'avance.
